# EUROPEAN PATENT APPLICATION

(11) **EP 4 518 206 A1**
(43) Date of publication of application: **05.03.2025**
(21) Application number: 23811063.9
(22) Date of filing: 23.05.2023
(51) Int. Cl.: H04L 1/00

(54) **COMMUNICATION METHOD AND APPARATUS**

(30) Priority: 25.05.2022 CN 202210576571
(71) Applicant: Huawei Technologies Co., Ltd., Shenzhen, Guangdong 518129 (CN)
(72) Inventor: DONG, Lei, Shenzhen, Guangdong 518129 (CN); TANG, Hao, Shenzhen, Guangdong 518129 (CN); ZHANG, Liqing, Shenzhen, Guangdong 518129 (CN)
(74) Representative: MERH-IP Matias Erny Reichl Hoffmann Patentanwälte PartG mbB
(86) International application number: PCT/CN2023/095859
(87) International publication number: WO 2023/226992

(57) **Abstract**

This application provides a communication method and apparatus, to improve information transmission reliability or spectral efficiency. The method includes: A terminal device determines first information. The terminal device sends the first information and second information to a network device, where the second information is used to determine at least one of a modulation scheme of the first information or a code rate of the first information. The network device receives the first information and the second information that are sent by the terminal device. The network device decodes the first information based on the second information.

## Description

This application claims priority to Chinese Patent Application No. 202210576571.4, filed with the China National Intellectual Property Administration on May 25, 2022 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

With continuous development of technologies related to three driving forces of artificial intelligence (artificial intelligence, AI), that is, computing power, algorithms, and data, AI technologies have set off a new round of technological revolution in human society. Research on existing technologies shows that AI has great application potential in many aspects such as modeling and learning in a complex unknown environment, channel prediction, intelligent signal generation and processing, network status tracking and intelligent scheduling, and network optimization and deployment, is expected to promote evolution of a future communication paradigm and network architecture transformation, and is of great significance and value to research on a 6th generation (6th generation, 6G) mobile communication technology. In addition, convergence of a communication network, a sensing network, and a computing network has also become one of the leading trends in the 6G technology and services.

In a new radio (new radio, NR) system, uplink control information (uplink control information, UCI) may be transmitted separately on a physical uplink control channel (physical uplink control channel, PUCCH) or a physical uplink shared channel (physical uplink shared channel, PUSCH), or may be multiplexed with data for transmission on a PUSCH. Currently, when the UCI is transmitted on the PUCCH or the PUSCH, a low code rate (code rate, CR) is used to ensure reliability of UCI transmission. In the 6G technology, a large amount of artificial intelligence information and/or sensing information is generated in an AI model and a sensing network in 6G, to further improve spectral efficiency of a system. A range of a quantity of bits of the artificial intelligence information and/or the sensing information is larger than a range of a quantity of bits of data and/or UCI transmitted by a terminal device to a network device in the conventional technology. A maximum quantity of bits of the artificial intelligence information and/or the sensing information in 6G may be far greater than a quantity of bits supported by an NR technology or an existing solution. In addition, due to characteristics of the artificial intelligence information and/or the sensing information, a large data amount may correspond to low reliability and higher spectral efficiency. Therefore, the NR technology or the existing solution cannot match a transmission requirement of the artificial intelligence information and/or the sensing information in the 6G technology.

### SUMMARY

This application provides a communication method and apparatus, to flexibly adjust information transmission reliability or spectral efficiency.

According to a first aspect, a communication method is provided. The method can be performed by a terminal device or a chip or a chip system on a terminal device side. The method includes: A terminal device determines first information. The terminal device sends the first information and second information to a network device, where the second information is used to determine at least one of a modulation scheme of the first information or a code rate of the first information. It should be understood that the first information is modulated. That the terminal device determines the first information may be understood as that the terminal device modulates target information to obtain the first information.

Based on the foregoing technical solution, the terminal device sends the first information and the second information to the network device, where the second information is used by the network device to determine the modulation scheme of the first information and/or the code rate of the first information. A lower code rate indicates higher information transmission reliability and lower spectral efficiency. A higher code rate indicates lower information transmission reliability and higher spectral efficiency. A lower modulation order indicates higher information transmission reliability and lower spectral efficiency. A higher modulation order indicates lower information transmission reliability and higher spectral efficiency. The terminal device may determine the modulation scheme of the first information and/or the code rate of the first information, and flexibly adjust information transmission reliability and/or frequency offset efficiency.

In some implementations of the first aspect, the first information includes artificial intelligence information and/or sensing information.

In some implementations of the first aspect, the second information includes a first index, and the first index corresponds to at least one of a type of the first information, the modulation scheme of the first information, the code rate of the first information, or a transport block size of the first information. Based on the foregoing solution, the network device may determine, based on the first index, the modulation scheme of the first information and/or the code rate of the first information corresponding to the first index. Then, the network device may decode the first information based on the modulation scheme of the first information and/or the code rate of the first information. This can reduce signaling overheads.

In some implementations of the first aspect, the method further includes: The terminal device receives first configuration information from the network device, where the first configuration information includes a first mapping relationship between the first index and at least one of the type of the first information, the modulation scheme of the first information, the code rate of the first information, or the transport block size of the first information. Optionally, the first mapping relationship may alternatively be predefined. Both the terminal device and the network device store the first mapping relationship. The terminal device only sends the first index to the network device, and the network device may determine the modulation scheme of the first information and/or the code rate of the first information based on the first index and the first mapping relationship, to decode the first information. This can reduce signaling overheads.

In some implementations of the first aspect, the modulation scheme of the first information and/or the code rate of the first information are/is determined by the terminal device based on at least one of quality of service of the first information or channel state information for information transmission between the terminal device and the network device.

The quality of service of the first information may include one or more of a priority, reliability, and a delay. For example, when the first information is high-priority information, the terminal device may transmit the first information by using a low code rate, to improve transmission reliability; or when the first information is low-priority information, the terminal device may transmit the first information by using a high code rate, to improve transmission spectral efficiency.

The channel state information for information transmission between the terminal device and the network device may include one or more of channel quality information (channel quality information, CQI), a precoding matrix indicator (precoding matrix indicator, PMI), a channel state information-reference signal resource indicator (CSI-RS resource indicator, CRI), a synchronization signal/physical broadcast channel resource block indicator (SS/PBCH resource block indicator, SSBRI), a layer indicator (layer indicator, LI), a rank indicator (rank indicator, RI), or a layer 1-reference signal received power (layer 1-reference signal received power, L1-RSRP). For example, when a CQI index is large, it indicates that a current channel state is good, and a high code rate and a high modulation order can be supported; or when a CQI index is small, it indicates that a current channel state is poor, and only a low code rate and a low modulation order can be supported. For another example, when attenuation of the L1-RSRP is large, it indicates that a current channel state is poor, and only a low code rate and a low modulation order can be supported; or when attenuation of the L1-RSRP is small, it indicates that a current channel state is good, and a high code rate and a high modulation order can be supported.

Therefore, in this solution, the modulation scheme of the first information and/or the code rate of the first information may match a transmission requirement of the first information, so that information transmission reliability or spectral efficiency can be improved.

There is the first mapping relationship between the first index and at least one of the type of the first information, the modulation scheme of the first information, the code rate of the first information, or the transport block size of the first information. The modulation scheme of the first information and/or the code rate of the first information may be determined by the terminal device based on at least one of the quality of service of the first information or the channel state information for information transmission between the terminal device and the network device. Optionally, the first index may also be determined by the terminal device based on at least one of the type of the first information, the transport block size of the first information, the quality of service of the first information, or the channel state information for information transmission between the terminal device and the network device.

In some implementations of the first aspect, the second information includes at least one of a type of the first information, a transport block size of the first information, the modulation scheme of the first information, or the code rate of the first information. Based on the foregoing solution, the network device may directly determine the modulation scheme of the first information and/or the code rate of the first information based on the second information, to decode the first information.

In some implementations of the first aspect, the method further includes: The terminal device receives second configuration information from the network device, where the second configuration information indicates a resource for sending the first information by the terminal device, and the resource includes at least one of a time domain resource, a frequency domain resource, a code domain resource, and a space domain resource. That the terminal device sends the first information and the second information to the network device includes: The terminal device sends the first information and the second information to the network device on the resource.

Based on the foregoing solution, the first information is transmitted by using a dedicated resource, so that interference to existing uplink control information transmission can be reduced, and information transmission reliability can be improved.

In some implementations of the first aspect, that the terminal device sends the first information and the second information to the network device includes: The terminal device sends third information and fourth information to the network device, where the third information includes N pieces of first information, the N pieces of first information correspond to M₁ modulation schemes and/or M₂ code rates, the fourth information is used to determine a modulation scheme of the third information and/or a code rate of the third information, M₁ is less than or equal to N, M₂ is less than or equal to N, and M₁, M₂, and N are positive integers. The terminal device sends the N pieces of first information to the network device together, so that transmission resource overheads can be reduced, and resource utilization and spectral efficiency of information transmission can be improved.

In some implementations of the first aspect, the N pieces of first information are sent in a frequency division multiplexing mode, a time division multiplexing mode, or a predefined mode. The N pieces of first information are multiplexed together for sending, so that resource utilization and spectral efficiency of information transmission can be improved.

According to a second aspect, a communication method is provided. The method can be performed by a network device or a chip or a chip system on a network device side. The method includes: A network device receives first information and second information that are sent by a terminal device, where the second information is used to determine at least one of a modulation scheme of the first information or a code rate of the first information. The network device decodes the first information based on the second information.

Based on the foregoing technical solution, the network device receives the first information and the second information that are sent by the terminal device, where the second information is used to determine the modulation scheme of the first information and/or the code rate of the first information, the first information is modulated by the terminal device by using a target modulation scheme and/or a target code rate, and the network device decodes the first information based on the second information. The modulation scheme of the first information and/or the code rate of the first information are/is determined by the terminal device. A lower code rate indicates higher information transmission reliability and lower spectral efficiency. A higher code rate indicates lower information transmission reliability and higher spectral efficiency. A lower modulation order indicates higher information transmission reliability and lower spectral efficiency. A higher modulation order indicates lower information transmission reliability and higher spectral efficiency. Therefore, the solution can flexibly adjust information transmission reliability and/or frequency offset efficiency.

In some implementations of the second aspect, the first information includes artificial intelligence information and/or sensing information.

In some implementations of the second aspect, the second information includes a first index, and the first index corresponds to at least one of a type of the first information, the modulation scheme of the first information, the code rate of the first information, or a transport block size of the first information. Based on the foregoing solution, the network device may determine, based on the first index, the modulation scheme of the first information and/or the code rate of the first information corresponding to the first index. Then, the network device may decode the first information based on the modulation scheme of the first information and/or the code rate of the first information.

In some implementations of the second aspect, the method further includes: The network device sends first configuration information to the terminal device, where the first configuration information includes a first mapping relationship between the index of the first information and at least one of the type of the first information, the modulation scheme of the first information, the code rate of the first information, or the transport block size of the first information. Optionally, the first mapping relationship may alternatively be predefined. Both the terminal device and the network device store the first mapping relationship. The terminal device only sends the first index to the network device, and the network device may determine the modulation scheme of the first information and/or the code rate of the first information based on the first index and the first mapping relationship, to decode the first information.

In some implementations of the second aspect, the modulation scheme of the first information and/or the code rate of the first information are/is determined by the terminal device based on at least one of quality of service of the first information or channel state information for information transmission between the terminal device and the network device.

The quality of service of the first information may include one or more of a priority, reliability, and a delay. For example, when the first information is high-priority information, the terminal device may transmit the first information by using a low code rate, to improve transmission reliability; or when the first information is low-priority information, the terminal device may transmit the first information by using a high code rate, to improve transmission spectral efficiency.

The channel state information for information transmission between the terminal device and the network device may include one or more of CQI, a PMI, a CRI, an SSBRI, an LI, an RI, or an L1-RSRP. For example, when a CQI index is large, it indicates that a current channel state is good, and a high code rate and a high modulation order can be supported; or when a CQI index is small, it indicates that a current channel state is poor, and only a low code rate and a low modulation order can be supported. For another example, when attenuation of the L1-RSRP is large, it indicates that a current channel state is poor, and only a low code rate and a low modulation order can be supported; or when attenuation of the L1-RSRP is small, it indicates that a current channel state is good, and a high code rate and a high modulation order can be supported.

Therefore, in this solution, the modulation scheme of the first information and/or the code rate of the first information may match a transmission requirement of the first information, so that information transmission reliability or spectral efficiency can be improved.

There is the first mapping relationship between the first index and at least one of the type of the first information, the modulation scheme of the first information, the code rate of the first information, or the transport block size of the first information. The modulation scheme of the first information and/or the code rate of the first information may be determined by the terminal device based on at least one of the quality of service of the first information or the channel state information for information transmission between the terminal device and the network device. Optionally, the first index may also be determined by the terminal device based on at least one of the type of the first information, the transport block size of the first information, the quality of service of the first information, or the channel state information for information transmission between the terminal device and the network device.

In some implementations of the second aspect, the second information includes at least one of a type of the first information, a transport block size of the first information, the modulation scheme of the first information, or the code rate of the first information. Based on the foregoing solution, the network device may directly determine the modulation scheme of the first information and/or the code rate of the first information based on the second information, to decode the first information.

In some implementations of the second aspect, the method further includes: the network device sends second configuration information to the terminal device, where the second configuration information indicates a resource for sending the first information by the terminal device, and the resource includes at least one of a time domain resource, a frequency domain resource, a code domain resource, and a space domain resource. That the network device receives the first information and the second information that are sent by the terminal device includes: The network device receives, on the resource, the first information and the second information that are sent by the terminal device.

Based on the foregoing solution, the first information is transmitted by using a dedicated resource, so that interference to existing uplink control information transmission can be reduced, and information transmission reliability can be improved.

In some implementations of the second aspect, that the network device receives the first information and the second information that are sent by the terminal device includes: The network device receives third information and fourth information that are sent by the terminal device, where the third information includes N pieces of first information, the N pieces of first information correspond to M₁ modulation schemes and/or M₂ code rates, the fourth information is used to determine a modulation scheme of the third information and/or a code rate of the third information, M₁ is less than or equal to N, M₂ is less than or equal to N, and M₁, M₂, and N are positive integers. The terminal device sends the N pieces of first information to the network device together, so that transmission resource overheads can be reduced, and resource utilization and spectral efficiency of information transmission can be improved.

In some implementations of the second aspect, the N pieces of first information are sent in a frequency division multiplexing mode, a time division multiplexing mode, or a predefined mode. The N pieces of first information are multiplexed together for sending, so that resource utilization and spectral efficiency of information transmission can be improved.

According to a third aspect, a communication apparatus is provided. The apparatus may be used in the terminal device according to the first aspect. The communication apparatus may be a terminal device, or may be an apparatus (for example, a chip, a chip system, or a circuit) in the terminal device, or may be an apparatus that can be used together with the terminal device or a network device. In a possible implementation, the communication apparatus may include modules or units that one to one correspond to the methods/operations/steps/actions described in the first aspect. The modules or units may be hardware circuits, software, or may be implemented by a hardware circuit in combination with software.

In a possible implementation, the apparatus includes: a processing module, configured to determine first information; and a transceiver module, configured to send the first information and second information to a network device, where the second information is used to determine at least one of a modulation scheme of the first information or a code rate of the first information.

In some implementations of the third aspect, the first information includes artificial intelligence information and/or sensing information.

In some implementations of the third aspect, the second information includes a first index, and the first index corresponds to at least one of a type of the first information, the modulation scheme of the first information, the code rate of the first information, or a transport block size of the first information.

In some implementations of the third aspect, the transceiver module is further configured to receive first configuration information from the network device, where the first configuration information includes a first mapping relationship between the first index and at least one of the type of the first information, the modulation scheme of the first information, the code rate of the first information, or the transport block size of the first information.

In some implementations of the third aspect, the modulation scheme of the first information and/or the code rate of the first information are/is determined by the processing module based on at least one of quality of service of the first information or channel state information for information transmission between the apparatus and the network device.

In some implementations of the third aspect, the second information includes at least one of a type of the first information, a transport block size of the first information, the modulation scheme of the first information, or the code rate of the first information.

In some implementations of the third aspect, the transceiver module is further configured to receive second configuration information from the network device, where the second configuration information indicates a resource for sending the first information by the transceiver module, and the resource includes at least one of a time domain resource, a frequency domain resource, a code domain resource, and a space domain resource. The transceiver module is specifically configured to send the first information and the second information to the network device on the resource.

In some implementations of the third aspect, the transceiver module is specifically configured to send third information and fourth information to the network device, where the third information includes N pieces of first information, the N pieces of first information correspond to M₁ modulation schemes and/or M₂ code rates, the fourth information is used to determine a modulation scheme of the third information and/or a code rate of the third information, M₁ is less than or equal to N, M₂ is less than or equal to N, and M₁, M₂, and N are positive integers.

In some implementations of the third aspect, the N pieces of first information are sent in a frequency division multiplexing mode, a time division multiplexing mode, or a predefined mode.

According to a fourth aspect, a communication apparatus is provided. The apparatus may be used in the network device according to the second aspect. The communication apparatus may be a network device, or may be an apparatus (for example, a chip, a chip system, or a circuit) in the network device, or may be an apparatus that can be used together with a terminal device or the network device. In a possible implementation, the communication apparatus may include modules or units that one to one correspond to the methods/operations/steps/actions described in the second aspect. The modules or units may be hardware circuits, software, or may be implemented by a hardware circuit in combination with software.

In a possible implementation, the apparatus includes: a transceiver module, configured to receive first information and second information that are sent by a terminal device, where the second information is used to determine at least one of a modulation scheme of the first information or a code rate of the first information; and a processing module, configured to decode the first information based on the second information.

In some implementations of the fourth aspect, the first information includes artificial intelligence information and/or sensing information.

In some implementations of the fourth aspect, the second information includes a first index, and the first index corresponds to at least one of a type of the first information, the modulation scheme of the first information, the code rate of the first information, or a transport block size of the first information.

In some implementations of the fourth aspect, the transceiver module is further configured to send first configuration information to the terminal device, where the first configuration information includes a first mapping relationship between the index of the first information and at least one of the type of the first information, the modulation scheme of the first information, the code rate of the first information, or the transport block size of the first information.

In some implementations of the fourth aspect, the modulation scheme of the first information and/or the code rate of the first information are/is determined by the terminal device based on at least one of quality of service of the first information or channel state information for information transmission between the terminal device and the network device.

In some implementations of the fourth aspect, the second information includes at least one of a type of the first information, a transport block size of the first information, the modulation scheme of the first information, or the code rate of the first information.

In some implementations of the fourth aspect, the transceiver module is further configured to send second configuration information to the terminal device, where the second configuration information indicates a resource for sending the first information by the terminal device, and the resource includes at least one of a time domain resource, a frequency domain resource, a code domain resource, and a space domain resource. The transceiver module is specifically configured to receive, on the resource, the first information and the second information that are sent by the terminal device.

In some implementations of the fourth aspect, the transceiver module is specifically configured to receive third information and fourth information that are sent by the terminal device, where the third information includes N pieces of first information, the N pieces of first information correspond to M₁ modulation schemes and/or M₂ code rates, the fourth information is used to determine a modulation scheme of the third information and/or a code rate of the third information, M₁ is less than or equal to N, M₂ is less than or equal to N, and M₁, M₂, and N are positive integers.

In some implementations of the fourth aspect, the N pieces of first information are sent in a frequency division multiplexing mode, a time division multiplexing mode, or a predefined mode.

According to a fifth aspect, this application provides a communication apparatus. The communication apparatus includes a processor, where the processor is configured to implement the method according to the first aspect and any one of the possible implementations of the first aspect by using a logic circuit or by executing instructions or a computer program.

In a possible implementation, the apparatus further includes a transceiver, configured to receive and send a signal, for example, send first information and second information.

In a possible implementation, the processor is coupled to a memory, and the memory stores the foregoing instructions or computer program.

In a possible implementation, the apparatus further includes a memory, configured to store the foregoing instructions. Optionally, the memory is integrated with the processor, or the memory and the processor are separately disposed.

According to a sixth aspect, this application provides a communication apparatus. The communication apparatus includes a processor, where the processor is configured to implement the method according to the second aspect and any one of the possible implementations of the second aspect by using a logic circuit or by executing instructions or a computer program.

In a possible implementation, the apparatus further includes a transceiver, configured to receive and send a signal, for example, receive first information and second information.

In a possible implementation, the processor is coupled to a memory, and the memory stores the foregoing instructions or computer program.

In a possible implementation, the apparatus further includes a memory, configured to store the foregoing instructions. Optionally, the memory is integrated with the processor, or the memory and the processor are separately disposed.

According to a seventh aspect, a communication device is provided, including an input/output interface and a logic circuit, where the input/output interface is configured to receive or output information, and the logic circuit is configured to perform the method according to the first aspect or any one of the possible implementations of the first aspect.

According to an eighth aspect, a communication device is provided, including an input/output interface and a logic circuit, where the input/output interface is configured to receive or output information, and the logic circuit is configured to perform the method according to the second aspect or any one of the possible implementations of the second aspect.

According to a ninth aspect, a communication system is provided, including a terminal device in the method according to the first aspect or the second aspect, another communication device communicating with the terminal device, a network device, and another communication device communicating with the network device.

According to a tenth aspect, a computer-readable storage medium is provided. The computer-readable medium stores a computer program. When the computer program is run on a computer or a processor, the method according to the first aspect and any one of the possible implementations of the first aspect is performed.

According to an eleventh aspect, a computer-readable storage medium is provided. The computer-readable medium stores a computer program. When the computer program is run on a computer or a processor, the method according to the second aspect and any one of the possible implementations of the second aspect is performed.

According to a twelfth aspect, a computer program product including instructions is provided, including a computer program. When the computer program is executed, the method according to the first aspect and any one of the possible implementations of the first aspect is implemented.

According to a thirteenth aspect, a computer program product including instructions is provided, including a computer program. When the computer program is executed, the method according to the second aspect and any one of the possible implementations of the second aspect is implemented.

The solutions provided in the third aspect to the thirteenth aspect are used to implement or cooperate to implement the methods provided in the first aspect or the second aspect, and therefore, can achieve beneficial effects the same as or corresponding to those in the first aspect or the second aspect. Details are not described herein again.

### BRIEF DESCRIPTION OF DRAWINGS

FIG. 1 to FIG. 5 are diagrams of constellation diagrams of different modulation orders;
FIG. 6 is a diagram of semi-persistent transmission of uplink control information;
FIG. 7 is a diagram of a network architecture to which a communication method according to an embodiment of this application is applied;
FIG. 8 is a schematic interaction flowchart of a communication method according to an embodiment of this application;
FIG. 9 is a diagram of a resource occupied by first information and a resource occupied by second information;
FIG. 10 is a diagram in which a network device indicates second configuration information or activates second configuration information by using DCI;
FIG. 11 is a diagram of a one-to-one correspondence between N pieces of second information and N pieces of first information;
FIG. 12 is a diagram in which one piece of first information corresponds to N pieces of second information;
FIG. 13 is a diagram of transmitting two types of first information in a frequency division multiplexing mode;
FIG. 14 is a diagram in which a resource for sending second information and a resource for sending first information are shared;
FIG. 15 is a diagram in which a resource for sending second information and a resource for sending first information are independent;
FIG. 16 is a diagram of transmitting two types of first information in a time division multiplexing mode;
FIG. 17 is another diagram of transmitting two types of first information in a time division multiplexing mode;
FIG. 18 is a diagram of transmitting two types of first information in a predefined mode;
FIG. 19 is a diagram of a structure of a communication apparatus according to an embodiment of this application;
FIG. 20 is a block diagram of another communication apparatus according to an embodiment of this application; and
FIG. 21 is a block diagram of a communication device according to an embodiment of this application.

### DESCRIPTION OF EMBODIMENTS

The following describes the technical solutions of this application with reference to the accompanying drawings.

Embodiments of this application may be applied to various communication systems, for example, a wireless local area network (wireless local area network, WLAN) system, a narrowband internet of things (narrowband internet of things, NB-IoT) system, a long term evolution (long term evolution, LTE) system, a satellite communication system, a 5th generation (5th generation, 5G) system, a 6G system, and other communication systems evolved after 5G.

The communication system applicable to this application includes one or more transmit ends and one or more receive ends. Signal transmission between the transmit end and the receive end may be performed by using a radio wave, or may be performed by using a transmission medium such as visible light, a laser, infrared, or an optical fiber.

For example, one of the transmit end and the receive end may be a terminal device, and the other may be a network device. For example, both the transmit end and the receive end may be terminal devices.

The terminal device in embodiments of this application may be a device having a wireless transceiver function, and may be specifically a subscriber unit (subscriber unit), user equipment (user equipment, UE), an access terminal, a cellular phone (cellular phone), a subscriber station, a mobile station (mobile station, MS), customer-premises equipment (customer-premises equipment, CPE), a remote station, a remote terminal, a mobile device, a user terminal, a wireless communication device, a user agent, or a user apparatus. The terminal device may alternatively be a satellite phone, a cellular phone, a smartphone, a wireless data card, a personal digital assistant (personal digital assistant, PDA) computer, a tablet computer, a wireless modulator demodulator (modulator demodulator, modem), a laptop computer (laptop computer), a machine type communication (machine type communication, MTC) device, a wireless terminal in self-driving (self-driving), or the like. The terminal device may alternatively be a cordless phone, a session initiation protocol (session initiation protocol, SIP) phone, a wireless local loop (wireless local loop, WLL) station, a personal digital assistant (personal digital assistant, PDA), a handheld device having a wireless communication function, a vehicle-mounted device, a wearable device, a computing device or another processing device connected to a wireless modem, a communication device carried on a high-altitude aircraft, an uncrewed aerial vehicle, a robot, a smart point of sale (point of sale, POS) machine, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. The user equipment includes vehicle user equipment. With emergence of an internet of things (internet of things, IOT) technology, more devices that previously do not have a communication function, for example, but not limited to, a household appliance, a transportation vehicle, a tool device, a service device, and a service facility, start to obtain a wireless communication function by being configured with a wireless communication unit, to access a wireless communication network, and accept remote control. This type of device has a wireless communication function because the device is configured with a wireless communication unit. Therefore, this type of device also belongs to a scope of wireless communication devices. This is not limited in this application.

In embodiments of this application, an apparatus configured to implement a function of the terminal device may be a terminal device, or may be an apparatus that can support the terminal device in implementing the function, for example, a chip system. The apparatus may be mounted in the terminal device or used in a manner of matching the terminal device. In embodiments of this application, the chip system may include a chip, or may include a chip and another discrete component.

For example, the network device is a device having a wireless transceiver function, and is configured to communicate with the terminal device, or may be a device that enables the terminal device to access a wireless network. The network device may be a node in a radio access network, and may also be referred to as a base station, or may be referred to as a radio access network (radio access network, RAN) node (or device). The network device may be an evolved NodeB (evolved NodeB, eNB or eNodeB) in LTE, a next generation NodeB (next generation NodeB, gNB) in a 5G network, a base station in a future evolved public land mobile network (public land mobile network, PLMN), a broadband network gateway (broadband network gateway, BNG), an aggregation switch or a non-3rd generation partnership project (3rd generation partnership project, 3GPP) access device, or the like. Optionally, the network device in embodiments of this application may include various forms of base stations, for example, a relay station, an access point, a device that implements a base station function in a communication system evolved after 5G, a mobile switching center, a home evolved NodeB (home evolved NodeB or home NodeB, HNB), a baseband unit (baseband unit, BBU), a device that undertakes a base station function in device-to-device (device-to-device, D2D), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), and a device that undertakes a base station function in vehicle-to-everything (vehicle-to-everything, V2X) and machine-to-machine (machine-to-machine, M2M) communication; and may further include a central unit (central unit, CU) and a distributed unit (distributed unit, DU) in a cloud access network (cloud radio access network, C-RAN) system, and a network device in a non-terrestrial network (non-terrestrial network, NTN) communication system, that is, may be deployed on a high-altitude platform or satellite. Alternatively, the network device may be a gNB or a transmission point in NR, one or one group of (including a plurality of) antenna panels of a base station in NR, or may be a network node that constitutes a gNB or a transmission point, for example, a baseband unit (building baseband unit, BBU) or a distributed unit (distributed unit, DU). Alternatively, the network device may be a vehicle-mounted device, a wearable device, a network device in a 6G network, a network device in a future evolved PLMN network, or a network device deployed on a satellite. This is not limited in embodiments of this application. In addition, based on a size of a provided service coverage area, base stations may be classified into a macro base station configured to provide a macro cell (macro cell), a micro base station configured to provide a pico cell (pico cell), and a femto base station configured to provide a femto cell (femto cell). As wireless communication technologies keep evolving, another name may be used for a future base station.

The network device has abundant product forms. For example, in a product implementation process, the BBU and a radio frequency unit (radio frequency unit, RFU) may be integrated into a same device, and the device is connected to an antenna array through a cable (for example but not limited to a feeder). The BBU and the RFU may alternatively be disposed separately, are connected by using an optical fiber, and communicate with each other by using, for example but not limited to a common public radio interface (common public radio interface, CPRI) protocol. In this case, the RFU is usually referred to as a remote radio unit (remote radio unit, RRU), and is connected to the antenna array through a cable. In addition, the RRU may alternatively be integrated with the antenna array. For example, an active antenna unit (active antenna unit, AAU) product uses this structure.

In addition, the BBU may be further divided into a plurality of parts. For example, the BBU may be further divided into a CU and a DU based on real-time performance of a processed service. The CU is responsible for processing a non-real-time protocol and service, and the DU is responsible for processing a physical layer protocol and a real-time service. Further, some physical layer functions may be separated from the BBU or the DU and integrated into an AAU.

The network device may communicate and interact with a core network device, to provide a communication service for the terminal device. The core network device is, for example, a device in a 5G core network (core network, CN). As a bearer network, the core network provides an interface to a data network, provides communication connection, authentication, management, and policy control for a terminal, and bearers a data service.

In embodiments of this application, an apparatus configured to implement a function of the network device may be a network device, or may be an apparatus that can support the network device in implementing the function, for example, a chip system. The apparatus may be mounted in a network device or used in a manner of matching a network device.

Over the past several decades, a wireless communication system has undergone evolution and research from 1st generation analogue communication to 5G NR, and is undergoing research on a developing 6G technology. High throughputs and massive connectivity are always core challenges of the wireless communication network. To address the foregoing challenges, applications such as enhanced mobile broadband (enhanced mobile broadband, eMBB), ultra-reliable and low latency communication (ultra-reliable and low latency communication, URLLC), and massive machine type communications (massive machine type communications, mMTC) are proposed as technical objectives in a 5G communication system. A 6G wireless communication system is bound to evolve toward higher throughputs, a lower delay, higher reliability, more connections, higher spectrum utilization, and the like.

With continuous development of technologies related to three driving forces of AI, that is, computing power, algorithms, and data, AI technologies have set off a new round of technological revolution in human society. Research on existing technologies shows that AI has great application potential in many aspects such as modeling and learning in a complex unknown environment, channel prediction, intelligent signal generation and processing, network status tracking and intelligent scheduling, and network optimization and deployment, is expected to promote evolution of a future communication paradigm and network architecture transformation, and is of great significance and value to research on the 6G technology.

In addition, convergence of a communication network, a sensing network, and a computing network has also become one of the leading trends in the 6G technology and services. In a narrow sense, a sensing network is a system that has capabilities such as target positioning, target imaging, target detection, and target recognition, where the target positioning includes ranging, speed measurement, and angle measurement. In a broad sense, a sensing network is a system that can perceive attributes and a status of all services, networks, users/terminals, and environment objects.

To facilitate understanding of embodiments of this application, the following briefly describes technologies related to embodiments of this application.

A specific format (format) of a PUCCH is shown in Table 1. A PUCCH of format 0 or format 1 occupies one physical resource block (physical resource block, PRB) in frequency domain, a corresponding quantity of bits is less than or equal to 2, and multiplexing (multiplexing) of a plurality of UEs is supported. Format 0 occupies 1 or 2 symbols in time domain, and format 1 occupies 4 to 14 symbols in time domain. A quantity of bits corresponding to format 2 to format 4 is greater than 2, where format 4 corresponds to a medium quantity of bits, and format 3 corresponds to a large quantity of bits.

**Table 1**

| PUCCH format | PRBs | Quantity of symbols | Quantity of bits | Support UE multiplexing |
|---|---|---|---|---|
| 0 | 1 | 1 to 2 | ≤2 | Yes |
| 1 | 1 | 4 to 14 | ≤2 | Yes |
| 2 | 1 to 16 | 1 to 2 | >2 | No |
| 3 | 1 to 6, 8 to 10, 12, 15, 16 | 4 to 14 | >2 | No |
| 4 | 1 | 4 to 14 | >2 | Yes |

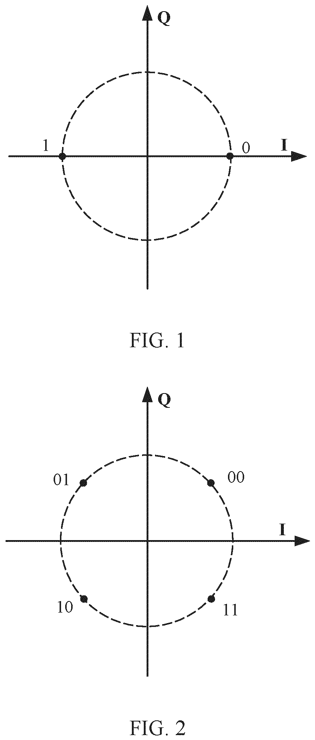

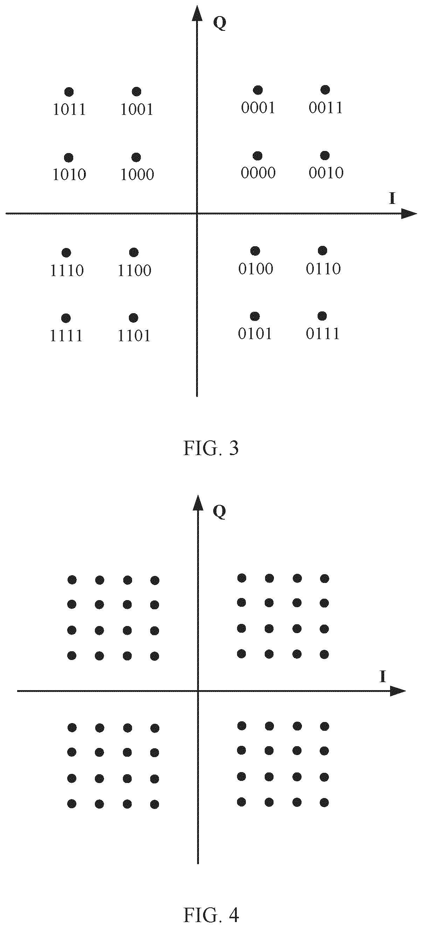

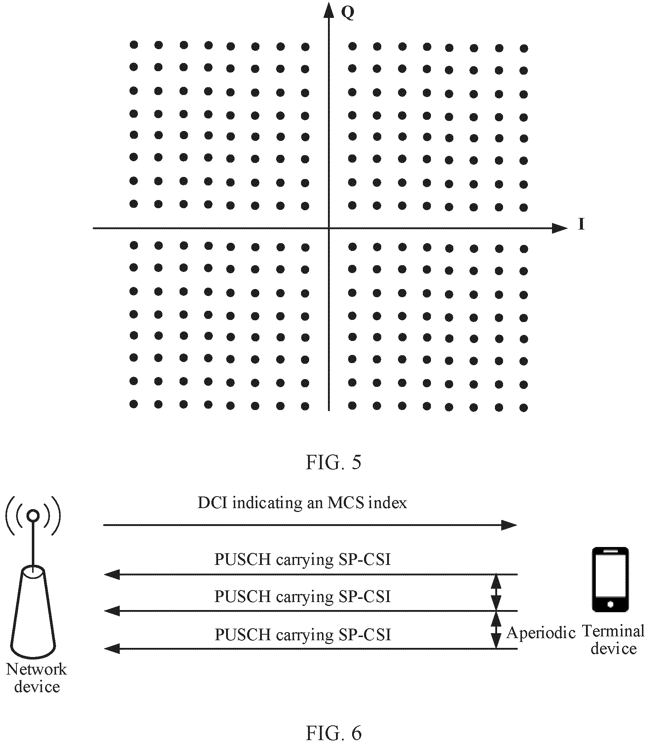

When UCI is transmitted on the PUCCH or a PUSCH, a conservative modulation scheme and a conservative code rate are used. In essence, modulation is to map a specific quantity of bits based on a predetermined constellation diagram. A modulation scheme may be reflected by using different modulation orders. The modulation order may be understood as a quantity of bits to be mapped to one symbol. The constellation diagram is a constellation diagram formed by using a quadrature amplitude modulation (quadrature amplitude modulation, QAM) codebook. When average energy is limited, a distance between constellation points is increased as much as possible to reduce misjudgment and provide a theoretical basis for demodulation and decoding on a receiver side. In a conventional constellation diagram modulation scheme, a bit stream is modulated according to a modulation rule of a uniform constellation diagram. FIG. 1 to FIG. 5 are diagrams of constellation diagrams of different modulation orders. A horizontal coordinate represents an I signal, and a vertical coordinate represents a Q signal. FIG. 1 is a diagram of a binary phase shift keying (binary phase shift keying, BPSK) constellation diagram. BPSK means mapping one bit to one symbol, and a modulation order is 1. FIG. 2 is a diagram of a quadrature phase shift keying (quadrature phase shift keying, QPSK) constellation diagram. QPSK means mapping two bits to one symbol, and a modulation order is 2. FIG. 3 to FIG. 5 are diagrams of quadrature amplitude modulation (quadrature amplitude modulation, QAM) constellation diagrams. FIG. 3 is a diagram of a 16QAM constellation diagram. 16QAM means mapping four bits to one symbol, and a modulation order is 4. FIG. 4 is a diagram of a 64QAM constellation diagram. 64QAM means mapping six bits to one symbol, and a modulation order is 6. FIG. 5 is a diagram of a 256QAM constellation diagram. 256QAM means mapping eight bits to one symbol, and a modulation order is 8.

A code rate (code rate, CR) is determined by a quantity of bits of original information before encoding, a resource element (resource element, RE) occupied for transmission, and a modulation order. The quantity of bits of the original information before encoding is a transport block size. Specifically, CR=quantity of bits of original information before encoding/(modulation order*quantity of REs*quantity of layers). For example, when format 3 occupies 16 PRBs in frequency domain, and occupies 12 symbols in time domain, a modulation scheme is QPSK, a quantity of layers is one, and a quantity of bits of original information before encoding is 100, a corresponding code rate=100/(2*12*12*16*1)=100/4608=0.02. 1 is the quantity of layers, 2 is a modulation order of QPSK, and 12 is a quantity of subcarriers included in one PRB.

In some implementations, the modulation order (modulation order) and the code rate may be determined based on a modulation and coding scheme (modulation and coding scheme, MCS) table. Table 2 shows an MCS table, where q is arbitrary or not fixed, and may be 2, 3, or 4. For example, when an MCS index (index) is 3 and the modulation order is 2, the code rate is 251/1024, where reserved indicates a reserved bit.

**Table 2**

| MCS index I_{MCS} | Modulation order Qₘ | Target code rate R* 1024 | Spectral efficiency |
|---|---|---|---|
| 0 | q | 240/q | 0.2344 |
| 1 | q | 314/q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.7305 |
| 18 | 6 | 466 | 3.0293 |
| 19 | 6 | 517 | 3.3223 |
| 20 | 6 | 567 | 3.6094 |
| 21 | 6 | 616 | 3.9023 |
| 22 | 6 | 666 | 4.2129 |
| 23 | 6 | 719 | 4.5234 |
| 24 | 6 | 772 | 4.8164 |
| 25 | 6 | 822 | 5.1152 |
| 26 | 6 | 873 | 5.3320 |
| 27 | 6 | 910 | 5.5547 |
| 28 | q | reserved | |
| 29 | 2 | reserved | |
| 30 | 4 | reserved | |
| 31 | 6 | reserved | |

In some implementations, when the UCI is separately transmitted on the PUCCH, a modulation scheme uses Pi/2-BPSK, BPSK, or QPSK. In addition, to ensure reliability of UCI transmission, a low code rate is used. Generally, the used modulation order and code rate are fixed.

In some implementations, when the UCI and data are multiplexed for transmission on the PUSCH, a modulation scheme of the UCI is the same as a modulation scheme of the multiplexed data. The network device indicates an MCS index in downlink control information (downlink control information, DCI), and controls a code rate by using a compensation factor β_{offset}, so that a code rate existing after the UCI and the data are multiplexed is slightly lower than a code rate existing when the data is separately transmitted.

In some implementations, when the UCI is separately transmitted on the PUSCH, a low code rate is also used to ensure reliability of UCI transmission. In addition, when the UCI is semipersistently transmitted on the PUSCH, a modulation order of the UCI and/or a code rate of the UCI are/is not updated with a change of a channel state. FIG. 6 is a diagram of semi-persistent (semi persistent, SP) transmission of uplink control information. Channel state information (channel state information, CSI) is an important type of UCI. The network device sends the DCI to the terminal device, where the DCI is used to schedule the terminal device to send SP-CSI on the PUSCH. The terminal device receives the DCI from the network device, and sends the SP-CSI to the network device based on the DCI.

In the 6G technology, a large amount of artificial intelligence information and/or sensing information is generated in an AI model and a sensing network of 6G, and specifically includes:
(1) Parameters related to AI performance: accuracy of the AI model, a loss value (loss value) of the AI model, a gradient (gradient), a block error rate (block error rate, BLER), a bit error rate (bit error rate, BER), a mean square error (mean square error), a mean absolute error (mean absolute error), a mean bias error (mean bias error), a cross entropy loss (cross entropy loss), a throughput (throughput), and latency (latency);
(2) Assistance information for AI model training or updating: correlation between AI models in the network device and the terminal device, and a parameter gradient of the AI model; and
(3) Sensing data: a doppler shift, a fading rate/level crossing rate (level crossing rate, LCR), average fading duration (average fading duration, AFD), a quantity of multipaths, a fading rate, a delay of multipath (delay of multipath), an average delay (average delay), a delay spread (delay spread), a UE location, a UE speed, temperature, humidity, weather information, environment information, and the like.

A range of a quantity of bits of the artificial intelligence information and/or the sensing information is larger than a range of a quantity of bits of data and/or UCI transmitted by the UE to the network device in some implementations. A maximum quantity of bits of the artificial intelligence information and/or the sensing information in 6G may be far greater than a quantity of bits supported by an NR technology or an existing solution. In addition, due to characteristics of the artificial intelligence information and/or the sensing information, a large data amount may correspond to low reliability and higher spectral efficiency. Therefore, the NR technology or the existing solution cannot match a transmission requirement of the artificial intelligence information and/or the sensing information in the 6G technology.

Therefore, an embodiment of this application provides a communication method, to improve information transmission reliability or spectral efficiency. A modulation scheme and/or a code rate used in this embodiment of this application may be referred to as a customized modulation scheme and/or code rate.

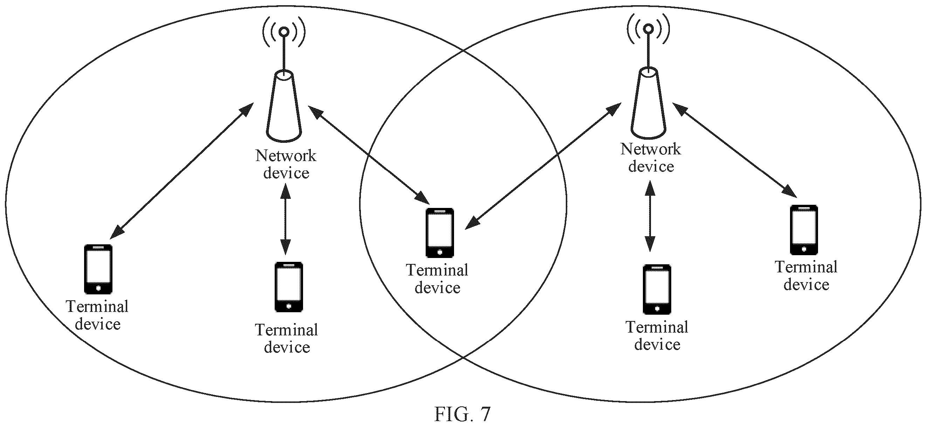

FIG. 7 is a diagram of a network architecture to which a communication method according to an embodiment of this application is applied. This embodiment of this application may be applied to a network in which a network device directly communicates with a terminal device, and network devices directly communicate with each other. The network devices may communicate with each other through a backhaul (backhaul) link. The backhaul link may be a wired backhaul link, for example, an optical fiber or a copper cable. The backhaul link may alternatively be a wireless backhaul link, for example, a microwave. The terminal device may communicate with a corresponding network device through a wireless link.

The network device is configured to provide a wireless access service for the terminal device. Specifically, each network device corresponds to a service coverage area, which may also be referred to as a cell, as shown by each elliptical area in FIG. 7. A terminal device that enters the area may communicate with the network device by using a radio signal, to receive a wireless access service provided by the network device. Service coverage areas of network devices may overlap, and a terminal device in an overlapping area may receive radio signals from a plurality of network devices. Therefore, the plurality of network devices may simultaneously provide services for the terminal device.

The foregoing describes a scenario to which the communication method provided in embodiments of this application is applied. The following describes in detail a specific implementation process of the communication method provided in embodiments of this application.

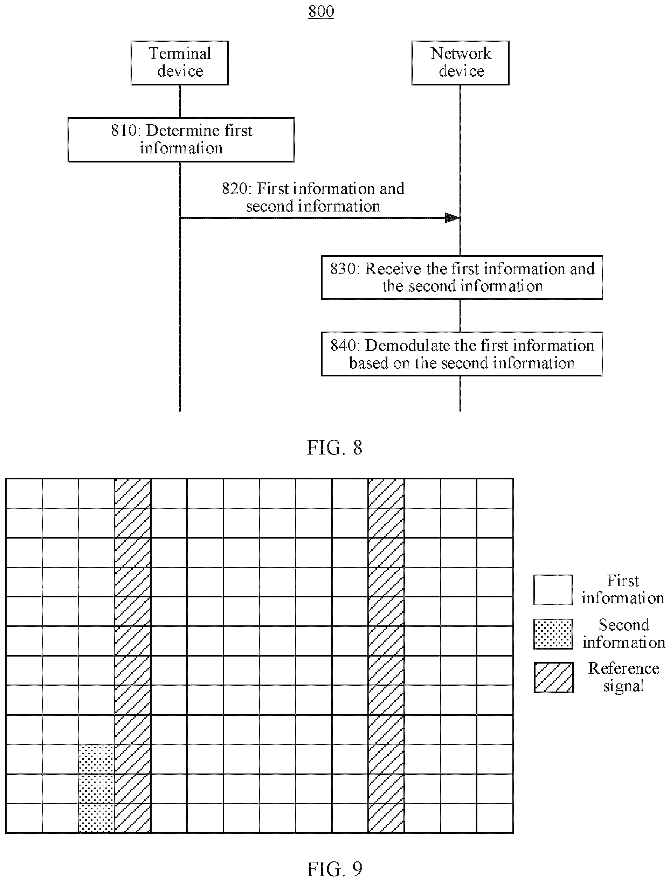

FIG. 8 is a schematic interaction flowchart of a communication method 800 according to an embodiment of this application.

810: A terminal device determines first information. Optionally, the first information includes artificial intelligence information and/or sensing information. In other words, the first information may include artificial intelligence information, the first information may include sensing information, or the first information may include artificial intelligence information and sensing information. The first information may further include other information generated in an AI model and a sensing network. The first information may alternatively be information generated in another communication scenario. This is not specifically limited in this embodiment of this application.

For example, the first information may be referred to as uplink AI sensing information (uplink AI sensing information, UASI).

820: The terminal device sends the first information and second information to a network device, where the second information is used to determine at least one of a modulation scheme of the first information or a code rate of the first information.

The modulation scheme of the first information may be reflected by using a modulation order of the first information. The modulation order of the first information may be understood as a quantity of bits of first information before encoding to be mapped to one symbol.

The code rate of the first information is determined by a quantity of bits of first information before encoding, an RE occupied for transmission, and the modulation order of the first information. The quantity of bits of the first information before encoding may be understood as a transport block size of the first information. Specifically, the code rate of the first information, the modulation scheme of the first information, and the transport block size of the first information may be represented by using the following formula (1):
CR of the first information=quantity of bits of the first information before encoding/(modulation order of the first information*quantity ofREs*quantity of layers)

The quantity of REs and the quantity of layers that are occupied for transmitting the first information are known to the terminal device. After the quantity of bits of the first information before encoding and the modulation order of the first information are determined, the code rate of the first information may be determined according to the foregoing formula (1). After the quantity of bits of the first information before encoding and the code rate of the first information are determined, the modulation order of the first information may be determined according to the foregoing formula (1).

For example, when PUCCH format 3 occupies 16 PRBs in frequency domain, and occupies 12 symbols in time domain, a modulation scheme is QPSK, a quantity of layers is one, and a quantity of bits of the first information before encoding is 200, a corresponding code rate=200/(2* 12* 12* 16* 1)=200/4608=0.04. 1 is the quantity of layers, 2 is a modulation order of QPSK, and 12 is a quantity of subcarriers included in one PRB.

Specifically, the second information is used by the network device to determine at least one of the modulation scheme of the first information or the code rate of the first information. In other words, the second information is used by the network device to decode the received first information. It should be understood that the first information received by the network device is encoded information. When sending the first information, the terminal device needs to perform a series of processing, for example, coding, rate matching, scrambling, modulation, layer mapping, precoding, and other operations, on the first information before coding. The modulation scheme of the first information and/or the code rate of the first information are/is determined by the terminal device. The terminal device performs rate matching modulation, and other steps based on the modulation scheme and/or the code rate determined by the terminal device.

For example, the terminal device may send the first information and the second information to the network device in a frequency division multiplexing (frequency division multiplexing, FDM) mode, a time division multiplexing (time division multiplexing, TDM) mode, or another predefined mode.

830: The network device receives the first information and the second information that are sent by the terminal device, where the second information is used to determine at least one of the modulation scheme of the first information or the code rate of the first information.

840: The network device decodes the first information based on the second information.

Specifically, the network device determines the modulation scheme of the first information and the code rate of the first information based on the second information, and decodes the first information based on the modulation scheme and the code rate.

In a first implementation, the second information includes a first index, and the first index corresponds to at least one of a type of the first information, the modulation scheme of the first information, the code rate of the first information, or the transport block size of the first information. The quantity of REs and the quantity of layers that are occupied for transmitting the first information are known to the terminal device. According to the foregoing formula (1), when the transport block size of the first information is fixed and the modulation scheme of the first information is determined, the code rate of the first information may be determined based on the modulation scheme of the first information; or when the transport block size of the first information is fixed and the code rate of the first information is determined, the modulation scheme of the first information may be determined based on the code rate of the first information.

The type of the first information may be a name of content of the first information, for example, a parameter related to AI performance in the artificial intelligence information, assistance information related to AI model training or updating in the artificial intelligence information, or sensing information such as a speed, a direction, and a doppler shift of the terminal device.

The AI or the sensing model depends on environment information. When the environment information changes, a type of the first information that needs to be fed back by the terminal device to the network device also changes accordingly. For example, the first information may include long-term (long-term) first information and short-term (short-term) first information. Some long-term first information may not change in a long periodicity. Therefore, the terminal device does not need to frequently feed the first information back to the network device. However, the short-term first information having a time-varying characteristic is greatly affected by an environment, and a type of the first information that the terminal device needs to feed back may also be uncertain. Therefore, the terminal device needs to determine the type of the first information, and may flexibly determine the transport block size of the first information, the modulation scheme of the first information, and/or the code rate of the first information based on the type of the first information.

Optionally, the modulation scheme of the first information and/or the code rate of the first information are/is determined by the terminal device based on at least one of the type of the first information, the transport block size of the first information, quality of service of the first information, or channel state information for information transmission between the terminal device and the network device.

For example, the modulation scheme of the first information and/or the code rate of the first information are/is determined by the terminal device based on the type of the first information. For example, the first information that currently needs to be fed back is environment map information in a large area. The first information of this type does not have a very strict requirement on transmission reliability. However, because a transport block corresponding to an environment map includes a large quantity of bits, higher spectral efficiency is required. Therefore, the terminal device may modulate the first information by using a high modulation order and a high code rate. For example, the first information that currently needs to be fed back is parameter information that has key impact on a procedure such as channel estimation, for example, parameter information such as the speed and a doppler spread of the terminal device. The first information of this type has a very strict requirement on transmission reliability. Therefore, the terminal device may modulate the first information by using a low modulation order and a low code rate.

For example, the modulation scheme of the first information and/or the code rate of the first information are/is determined by the terminal device based on at least one of the quality of service of the first information or the channel state information for information transmission between the terminal device and the network device. The quality of service of the first information includes a priority, reliability, a delay, and the like. Optionally, there is a correspondence between the quality of service of the first information and the type of the first information. After the type of the first information is determined, the quality of service of the first information is also determined accordingly. For example, when the first information is high-priority information, the terminal device may transmit the first information by using a low code rate, to improve transmission reliability; or when the first information is low-priority information, the terminal device may transmit the first information by using a high code rate, to improve transmission spectral efficiency.

The channel state information for information transmission between the terminal device and the network device includes one or more of channel quality information CQI, a PMI, a CRI, an SSBRI, an LI, an RI, or an L1-RSRP. For example, when a CQI index is large, it indicates that a current channel state is good, and a high code rate and a high modulation order can be supported; or when a CQI index is small, it indicates that a current channel state is poor, and only a low code rate and a low modulation order can be supported. For another example, when attenuation of the L1-RSRP is large, it indicates that a current channel state is poor, and only a low code rate and a low modulation order can be supported; or when attenuation of the L1-RSRP is small, it indicates that a current channel state is good, and a high code rate and a high modulation order can be supported.

Optionally, the type of the first information and/or the transport block size of the first information sent by the terminal device to the network device may be determined by the terminal device based on the channel state information for information transmission between the terminal device and the network device.

For example, when a CQI index is large, it indicates that a current channel state is good, and transmission of a large transport block can be supported, or a type of first information having a large transport block can be supported; or when a CQI index is small, it indicates that a current channel state is poor, and only transmission of a small transport block can be supported, or only a type of first information having a small transport block can be supported. For another example, when attenuation of the L1-RSRP is large, it indicates that a current channel state is poor, and only transmission of a large transport block can be supported, or a type of first information having a large transport block can be supported; or when attenuation of the L1-RSRP is small, it indicates that a current channel state is good, and transmission of a small transport block can be supported, or only a type of first information having a small transport block can be supported.

Optionally, the first index is determined by the terminal device based on at least one of the type of the first information, the modulation scheme of the first information, the code rate of the first information, or the transport block size of the first information. For example, after determining the modulation scheme of the first information and/or the code rate of the first information, the terminal device may determine, based on the modulation scheme of the first information and/or the code rate of the first information, the first index corresponding to the first information.

The network device may determine the type of the first information, the transport block size of the first information, the modulation scheme of the first information, the code rate of the first information, and the like based on the first index, to decode the first information.

It should be understood that both the terminal device and the network device store a first mapping relationship between the first index and at least one of the type of the first information, the modulation scheme of the first information, the code rate of the first information, or the transport block size of the first information.

The first mapping relationship may be configured by the network device and sent to the terminal device. Optionally, the network device sends first configuration information to the terminal device, where the first configuration information includes the first mapping relationship between the first index and at least one of the type of the first information, the modulation scheme of the first information, the code rate of the first information, or the transport block size of the first information. The terminal device receives the first configuration information from the network device, to obtain the first mapping relationship. It should be understood that the first mapping relationship may alternatively be predefined.

Table 3 shows an example of types (type), modulation orders (modulation order), code rates, and transport block sizes respectively corresponding to different indexes. Different modulation orders correspond to different modulation schemes. The table of parameters respectively corresponding to different indexes may be in another form, including one or more rows of the type, the modulation order, the code rate, or the transport block size. Details are not listed herein.

**Table 3**

| | Index 1 | Index 2 | Index 3 | ... |
|---|---|---|---|---|
| Type | 1 | 2 | 3 | ... |
| Modulation order | 2 | 4 | 4 | ... |
| Code rate | 0.2 | 0.3 | 0.4 | ... |
| Transport block size/bit | 10 | 10 | 10 | ... |

For example, the first mapping relationship is a mapping relationship between an index and a modulation scheme and/or a code rate. In other words, the first mapping relationship includes a mapping relationship between the first index and the modulation scheme of the first information and/or the code rate of the first information. In this case, the network device may directly determine the modulation scheme of the first information and/or the code rate of the first information based on the first index and the first mapping relationship, to decode the first information.

For example, the first mapping relationship is a mapping relationship between an index and a transport block size and a modulation scheme. In other words, the first mapping relationship includes a mapping relationship between the first index and the transport block size of the first information and the modulation scheme of the first information. In this case, the network device may determine the transport block size of the first information and the modulation scheme of the first information based on the first index and the first mapping relationship, and may determine the code rate of the first information according to the foregoing formula (1), to decode the first information.

For example, the first mapping relationship is a mapping relationship between an index and a transport block size and a code rate. In other words, the first mapping relationship includes a mapping relationship between the first index and the transport block size of the first information and the code rate of the first information. In this case, the network device may determine the transport block size of the first information and the code rate of the first information based on the first index and the first mapping relationship, and may determine the modulation scheme of the first information according to the foregoing formula (1), to decode the first information.

For example, the first mapping relationship is a mapping relationship between an index and a transport block size, a modulation scheme, and a code rate. In other words, the first mapping relationship includes a mapping relationship between the first index and the transport block size of the first information, the modulation scheme of the first information, and the code rate of the first information. In this case, the network device may determine the transport block size of the first information, the code rate of the first information, and the modulation scheme of the first information based on the first index and the first mapping relationship, to decode the first information.

For example, the first mapping relationship is a mapping relationship between an index and a type and a modulation scheme. In other words, the first mapping relationship includes a mapping relationship between the first index and the type of the first information and the modulation scheme of the first information. In this case, the network device may determine the type of the first information and the modulation scheme of the first information based on the first index and the first mapping relationship. Optionally, there is a second mapping relationship between the type or the modulation scheme and the transport block size. The second mapping relationship may be predefined or preconfigured. The network device determines the transport block size of the first information based on the second mapping relationship and the type of the first information or the modulation scheme of the first information, and then determines the code rate of the first information according to the foregoing formula (1), to decode the first information. Optionally, there is a third mapping relationship between the type or the modulation scheme and the code rate. The third mapping relationship may be predefined or preconfigured. The network device determines the code rate of the first information based on the third mapping relationship and the type of the first information or the modulation scheme of the first information, to decode the first information.

For example, the first mapping relationship is a mapping relationship between an index and a type and a code rate. In other words, the first mapping relationship includes a mapping relationship between the first index and the type of the first information and the code rate of the first information. In this case, the network device may determine the type of the first information and the code rate of the first information based on the first index and the first mapping relationship. Optionally, there is a fourth mapping relationship between the type or the code rate and the modulation scheme. The fourth mapping relationship may be predefined or preconfigured. The network device determines the modulation scheme of the first information based on the fourth mapping relationship and the type of the first information or the code rate of the first information, to decode the first information. Optionally, there is a fifth mapping relationship between the type or the code rate and the transport block size. The fifth mapping relationship may be predefined or preconfigured. The network device determines the transport block size of the first information based on the fifth mapping relationship and the type of the first information or the code rate of the first information, and then determines the modulation scheme of the first information according to the foregoing formula (1), to decode the first information.

For example, the first mapping relationship is a mapping relationship between an index and a type, a modulation scheme, and a code rate. In other words, the first mapping relationship includes a mapping relationship between the first index and the type of the first information, the modulation scheme of the first information, and the code rate of the first information. In this case, the network device may directly determine the type of the first information, the code rate of the first information, and the modulation scheme of the first information based on the first index and the first mapping relationship, to decode the first information.

For example, the first mapping relationship is a mapping relationship between an index and a transport block size. In other words, the first mapping relationship includes a mapping relationship between the first index and the transport block size of the first information. In this case, the network device may determine the transport block size of the first information based on the first index and the first mapping relationship, and then determine the modulation scheme of the first information and/or the code rate of the first information based on the transport block size of the first information, to decode the first information. Optionally, there is a sixth mapping relationship between the transport block size and the modulation scheme and/or the code rate. The sixth mapping relationship may be predefined or preconfigured. The network device may determine the modulation scheme of the first information and/or the code rate of the first information based on the sixth mapping relationship and the transport block size of the first information, to decode the first information.

For example, the first mapping relationship is a mapping relationship between an index and a type. In other words, the first mapping relationship includes a mapping relationship between the first index and the type of the first information. In this case, the network device may determine the type of the first information based on the first index and the first mapping relationship, and then determine the modulation scheme of the first information and/or the code rate of the first information based on the type of the first information, to decode the first information. Optionally, there is a seventh mapping relationship between the type and the modulation scheme and/or the code rate. The seventh mapping relationship may be predefined or preconfigured. The network device may determine the modulation scheme of the first information and/or the code rate of the first information based on the seventh mapping relationship and the type of the first information, to decode the first information.

The first index may also be referred to as a first value. When there are only four types of indexes, specific values of fields corresponding to different indexes are shown in Table 4 or Table 5.

**Table 4**

| Index | Field |
|---|---|
| Index 1 | 00 |
| Index 2 | 01 |
| Index 3 | 10 |
| Index 4 | 11 |

**Table 5**

| Index | Field |
|---|---|
| Index 0 | 00 |
| Index 1 | 01 |
| Index 2 | 10 |
| Index 3 | 11 |

In a second implementation, the second information includes at least one piece of information of a type of the first information, a transport block size of the first information, the modulation scheme of the first information, or the code rate of the first information. The network device may determine at least one of the type of the first information, the transport block size of the first information, the modulation scheme of the first information, and the code rate of the first information based on the second information, to decode the first information.

For example, the second information includes the modulation scheme of the first information and/or the code rate of the first information. In this case, the network device may directly determine the modulation scheme of the first information and/or the code rate of the first information based on the second information, to decode the first information.

For example, the second information includes the modulation scheme of the first information and the transport block size of the first information. In this case, the network device may determine the code rate of the first information based on the modulation scheme of the first information and the transport block size of the first information, to decode the first information.

For example, the second information includes the code rate of the first information and the transport block size of the first information. In this case, the network device may determine the modulation scheme of the first information based on the code rate of the first information and the transport block size of the first information, to decode the first information.

For example, the second information includes the transport block size of the first information, the modulation scheme of the first information, and/or the code rate of the first information.

For example, the second information includes the type of the first information, the modulation scheme of the first information, and/or the code rate of the first information.

For example, the second information includes the type of the first information, the transport block size of the first information, the modulation scheme of the first information, and the code rate of the first information.

For example, the second information includes the transport block size of the first information. In this case, the network device may determine the modulation scheme of the first information and/or the code rate of the first information based on the transport block size of the first information, to decode the first information. Optionally, there is a sixth mapping relationship between the transport block size and the modulation scheme and/or the code rate. The sixth mapping relationship may be predefined or preconfigured. The network device may determine the modulation scheme of the first information and/or the code rate of the first information based on the sixth mapping relationship and the transport block size of the first information, to decode the first information.

For example, the second information includes the type of the first information. In this case, the network device may determine the modulation scheme of the first information and/or the code rate of the first information based on the type of the first information, to decode the first information. Optionally, there is a seventh mapping relationship between the type and the modulation scheme and/or the code rate. The seventh mapping relationship may be predefined or preconfigured. The network device may determine the modulation scheme of the first information and/or the code rate of the first information based on the seventh mapping relationship and the type of the first information, to decode the first information.

Optionally, a type of information is configured by the network device and sent to the terminal device. After the terminal device determines first information that currently needs to be fed back, the terminal device may determine a type of the first information from a plurality of types of information. The network device not only configures a type of information, but may also configure a transport block size corresponding to each type of information.

In a possible implementation, the network device sends second configuration information to the terminal device, where the second configuration information indicates a resource for sending the first information by the terminal device. Optionally, the second configuration information may alternatively indicate a resource for sending the first information and the second information by the terminal device. The resource includes at least one of a time domain resource, a frequency domain resource, a code domain resource, and a space domain resource. Correspondingly, the terminal device receives the second configuration information from the network device.

Specifically, the terminal device sends the first information and the second information to the network device on the resource. Correspondingly, the network device receives, on the resource, the first information and the second information that are sent by the terminal device. The first information is transmitted by using a dedicated resource, so that interference to existing uplink control information transmission can be reduced, and information transmission reliability can be improved.

For example, the resource indicated by the second configuration information includes the time domain resource and the frequency domain resource. A channel used by the terminal device to send the first information may be referred to as a physical uplink AI and sensing channel (physical UL AI and sensing channel, PUASCH). FIG. 9 is a diagram of a resource occupied by first information and a resource occupied by second information in a PUASCH. White parts represent the resource occupied by the first information, black-and-white dot parts represent the resource occupied by the second information, and black-and-white twill parts represent a resource occupied by a reference signal (reference signal, RS). It should be understood that the resource indicated by the second configuration information may alternatively not include the resource occupied by the reference signal.

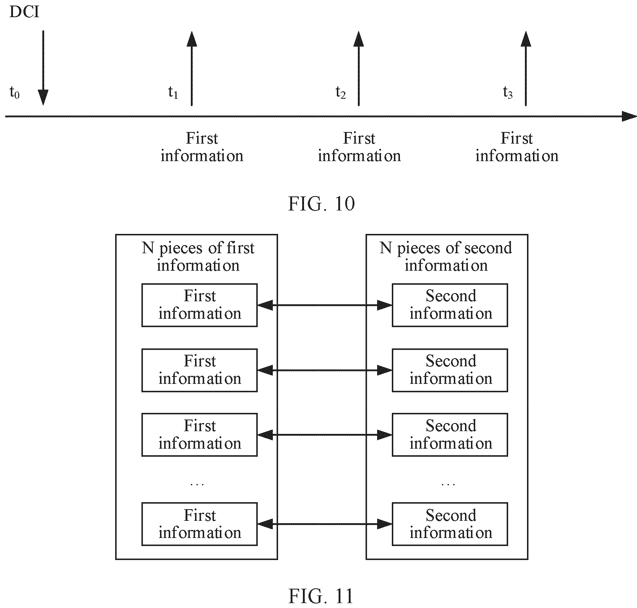

It should be understood that the second configuration information may be sent by the network device by using radio resource control (radio resource control, RRC) signaling, or may be sent by the network device by using physical layer signaling. Optionally, the physical layer signaling may be DCI. The second configuration information may alternatively be preconfigured in the terminal device. This is not specifically limited in this application. FIG. 10 is a diagram in which a network device indicates second configuration information or activates second configuration information by using DCI. The network device sends DCI to the terminal device at a moment t₀, where the DCI indicates the second configuration information or is used to activate the second configuration information, and is used to transmit the first information at moments t₁, t₂, and t₃ by using a customized modulation scheme and/or a customized code rate.

In a possible implementation, the terminal device may alternatively send the first information to the network device on an existing PUCCH or PUSCH.

In a possible implementation, the terminal device sends third information and fourth information to the network device, where the third information includes N pieces of first information, the N pieces of first information correspond to M₁ modulation schemes and/or M₂ code rates, and the fourth information is used to determine a modulation scheme of the third information and/or a code rate of the third information. In other words, the fourth information is used to determine modulation schemes of the N pieces of first information and/or code rates of the N pieces of first information. M₁ is less than or equal to N, M₂ is less than or equal to N, and M₁, M₂, and N are positive integers. Types of the N pieces of first information may be different, and transport block sizes of the N pieces of first information may also be different. For example, N is equal to 2, M₁ is equal to 1, and M₂ is equal to 2. In other words, the two pieces of first information have a same modulation scheme and different code rates. For another example, N is equal to 2, M₁ is equal to 2, and M₂ is equal to 2. In other words, the two pieces of first information have different modulation schemes and different code rates.

For example, the fourth information includes N pieces of second information, the N pieces of second information respectively indicate modulation schemes of the N pieces of first information and/or code rates of the N pieces of first information, and the N pieces of second information are in one-to-one correspondence with the N pieces of first information. FIG. 11 is a diagram of a one-to-one correspondence between N pieces of second information and N pieces of first information.

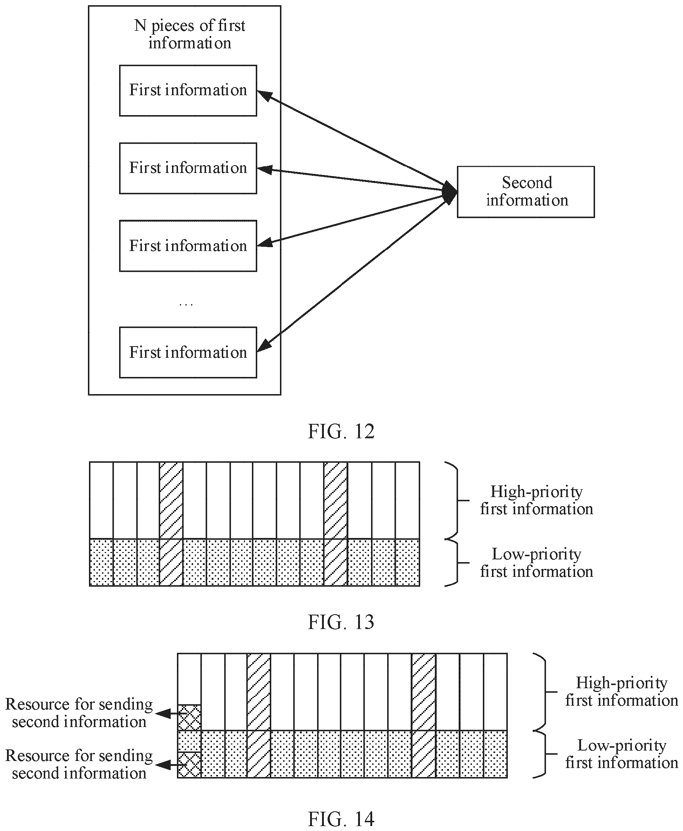

For example, the fourth information includes one piece of second information, and the second information indicates modulation schemes of the N pieces of first information and/or code rates of the N pieces of first information. FIG. 12 is a diagram in which one piece of second information corresponds to N pieces of first information.

Optionally, the N pieces of first information are sent in a frequency division multiplexing mode, a time division multiplexing mode, or a predefined mode. Resource utilization and spectral efficiency of information transmission can be improved.

Optionally, the terminal device may send the third information and the fourth information to the network device in the frequency division multiplexing mode, the time division multiplexing mode, or the predefined mode. In other words, the terminal device may send the N pieces of first information and the fourth information to the network device in the frequency division multiplexing mode, the time division multiplexing mode, or the predefined mode. A resource for sending the fourth information and a resource for sending the third information may be shared or independent. In other words, a resource for sending the second information and a resource for sending the first information may be shared or independent. The resource for sending the second information and the resource for sending the first information are shared, indicating that the resource used to transmit the second information is included in the resource used to transmit the first information. The resource for sending the second information and the resource for sending the first information may be independent, indicating that the resource used to transmit the second information and the resource used to transmit the first information are separated.

FIG. 13 is a diagram of transmitting two types of first information in a frequency division multiplexing mode. White parts represent a resource occupied by high-priority first information, black-and-white dot parts represent a resource occupied by low-priority first information, and black-and-white twill parts represent a resource occupied by a reference signal. It should be understood that FIG. 13 may alternatively not include the resource occupied by the reference signal. A modulation scheme of the high-priority first information may be different from a modulation scheme of the low-priority first information, and a code rate of the high-priority first information may also be different from a code rate of the low-priority first information.

FIG. 14 is a diagram in which a resource for sending second information and a resource for sending first information are shared. White parts represent a resource occupied by high-priority first information, black-and-white dot parts represent a resource occupied by low-priority first information, and black-and-white twill parts represent a resource occupied by a reference signal. It should be understood that FIG. 14 may alternatively not include the resource occupied by the reference signal. One piece of second information corresponds to one piece of first information, and the resource for sending the first information includes the resource for sending the second information.

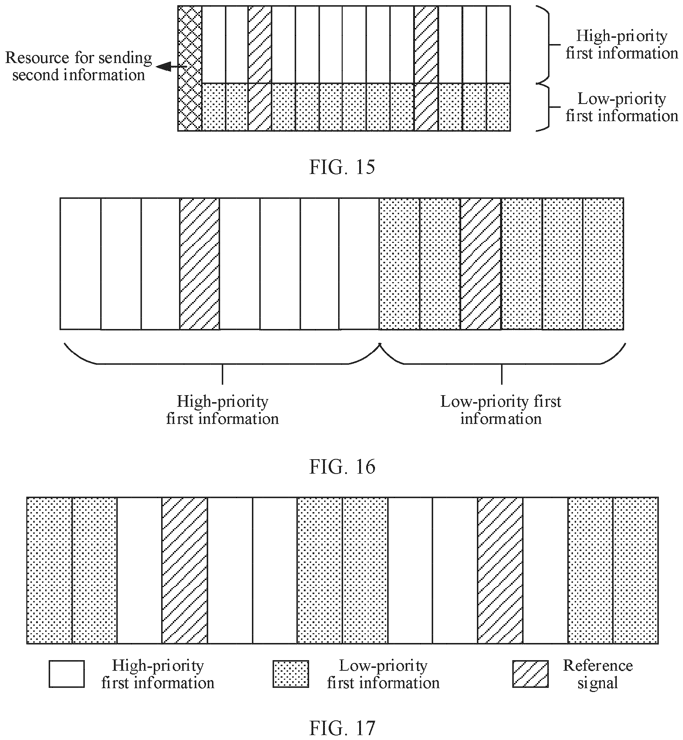

FIG. 15 is a diagram in which a resource for sending second information and a resource for sending first information are independent. White parts represent a resource occupied by high-priority first information, black-and-white dot parts represent a resource occupied by low-priority first information, and black-and-white twill parts represent a resource occupied by a reference signal. It should be understood that FIG. 14 may alternatively not include the resource occupied by the reference signal. One piece of second information corresponds to N pieces of first information, and the resource for sending the second information is independent of the resource for sending the N pieces of first information. In the following FIG. 16 to FIG. 18, a relationship between a resource for sending second information and a resource for sending first information is the same as that in FIG. 14 and FIG. 15. Details are not described again in embodiments of this application. FIG. 16 is a diagram of transmitting two types of first information in a time division multiplexing mode. Different types of first information may occupy consecutive time domain resources. White parts represent a resource occupied by high-priority first information, black-and-white dot parts represent a resource occupied by low-priority first information, and black-and-white twill parts represent a resource occupied by a reference signal. It should be understood that FIG. 16 may alternatively not include the resource occupied by the reference signal. A modulation scheme of the high-priority first information may be different from a modulation scheme of the low-priority first information, and a code rate of the high-priority first information may also be different from a code rate of the low-priority first information.

FIG. 17 is another diagram of transmitting two types of first information in a time division multiplexing mode. Different types of first information may occupy inconsecutive time domain resources. White parts represent a resource occupied by high-priority first information, black-and-white dot parts represent a resource occupied by low-priority first information, and black-and-white twill parts represent a resource occupied by a reference signal. It should be understood that FIG. 17 may alternatively not include the resource occupied by the reference signal. A modulation scheme of the high-priority first information may be different from a modulation scheme of the low-priority first information, and a code rate of the high-priority first information may also be different from a code rate of the low-priority first information.

Different types of first information may alternatively be sent to the network device in a predefined mode. For example, to ensure transmission reliability of the high-priority first information, the high-priority first information may be multiplexed with the reference signal for transmission, and the resource used to transmit the high-priority first information is close to the resource used to transmit the reference signal. Therefore, a more accurate channel estimation result can be obtained, thereby ensuring accurate demodulation and decoding of the high-priority first information. The resource used to transmit the low-priority first information is slightly far away from the resource used to transmit the reference signal.

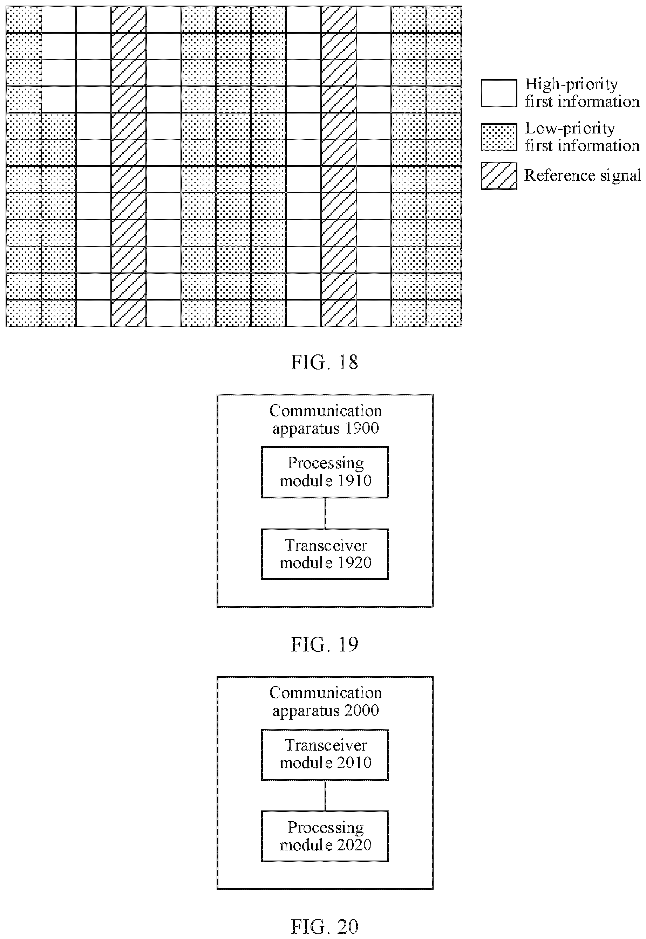

FIG. 18 is a diagram of transmitting two types of first information in a predefined mode. A resource occupied by high-priority first information is close to a resource occupied by a reference signal, and a resource occupied by low-priority first information is slightly far away from the resource occupied by the reference signal. White parts represent a resource occupied by high-priority first information, black-and-white dot parts represent a resource occupied by low-priority first information, and black-and-white twill parts represent a resource occupied by a reference signal. It should be understood that FIG. 18 may alternatively not include the resource occupied by the reference signal. A modulation scheme of the high-priority first information may be different from a modulation scheme of the low-priority first information, and a code rate of the high-priority first information may also be different from a code rate of the low-priority first information.

A plurality of different types of first information are multiplexed together for transmission, and the different types of first information may correspond to different priorities, reliability, modulation schemes, and code rates. For example, key first information such as an update request, a stop request, and derivation data of an AI model corresponds to a high priority and high reliability. Therefore, the terminal device may perform transmission by using a low code rate. First information such as training data and sensing data of the AI model corresponds to low reliability, and the first information of this type includes a large amount of information and a large quantity of bits. To improve spectral efficiency of transmitting the first information of this type, the terminal device may perform transmission by using a high code rate.

In the technical solution provided in embodiments of this application, the terminal device sends the first information and the second information to the network device, where the second information is used by the network device to determine the modulation scheme of the first information and/or the code rate of the first information, and the first information is modulated by the terminal device by using a target modulation scheme and/or a target code rate; and the network device decodes the first information based on the second information. The modulation scheme of the first information and/or the code rate of the first information are/is determined by the terminal device. A lower code rate indicates higher information transmission reliability and lower spectral efficiency. A higher code rate indicates lower information transmission reliability and higher spectral efficiency. A lower modulation order indicates higher information transmission reliability and lower spectral efficiency. A higher modulation order indicates lower information transmission reliability and higher spectral efficiency. Therefore, the solution can flexibly adjust information transmission reliability and/or frequency offset efficiency.

The foregoing describes the communication method provided in embodiments of this application. The following describes an execution body for performing the foregoing communication method.

An embodiment of this application provides a communication apparatus. FIG. 19 is a diagram of a structure of a communication apparatus 1900 according to an embodiment of this application. The apparatus may be used in or deployed in a terminal device in the method embodiments of this application. The communication apparatus 1900 includes:
a processing module 1910, configured to determine first information; and
a transceiver module 1920, configured to send the first information and second information to a network device, where the second information is used to determine at least one of a modulation scheme of the first information or a code rate of the first information.

Optionally, the first information includes artificial intelligence information and/or sensing information.

Optionally, the second information includes a first index, and the first index corresponds to at least one of a type of the first information, the modulation scheme of the first information, the code rate of the first information, or a transport block size of the first information.

Optionally, the transceiver module 1920 is further configured to receive first configuration information from the network device, where the first configuration information includes a first mapping relationship between the first index and at least one of the type of the first information, the modulation scheme of the first information, the code rate of the first information, or the transport block size of the first information.

Optionally, the modulation scheme of the first information and/or the code rate of the first information are/is determined by the processing module 1910 based on at least one of quality of service of the first information or channel state information for information transmission between the apparatus and the network device.

Optionally, the second information includes at least one of a type of the first information, a transport block size of the first information, the modulation scheme of the first information, or the code rate of the first information.

Optionally, the transceiver module 1920 is further configured to receive second configuration information from the network device, where the second configuration information indicates a resource for sending the first information by the transceiver module, and the resource includes at least one of a time domain resource, a frequency domain resource, a code domain resource, and a space domain resource. The transceiver module 1920 is specifically configured to send the first information and the second information to the network device on the resource.

Optionally, the transceiver module 1920 is specifically configured to send third information and fourth information to the network device, where the third information includes N pieces of first information, the N pieces of first information correspond to M₁ modulation schemes and/or M₂ code rates, the fourth information is used to determine a modulation scheme of the third information and/or a code rate of the third information, M₁ is less than or equal to N, M₂ is less than or equal to N, and M₁, M₂, and N are positive integers.

Optionally, the N pieces of first information are sent in a frequency division multiplexing mode, a time division multiplexing mode, or a predefined mode.

An embodiment of this application provides a communication apparatus. FIG. 20 is a diagram of a structure of a communication apparatus 2000 according to an embodiment of this application. The apparatus may be used in or deployed in a network device in the method embodiments of this application. The communication apparatus 2000 includes:
a transceiver module 2010, configured to receive first information and second information that are sent by a terminal device, where the second information is used to determine at least one of a modulation scheme of the first information or a code rate of the first information; and
a processing module 2020, configured to decode the first information based on the second information.

Optionally, the first information includes artificial intelligence information and/or sensing information.

Optionally, the second information includes a first index, and the first index corresponds to at least one of a type of the first information, the modulation scheme of the first information, the code rate of the first information, or a transport block size of the first information.

Optionally, the transceiver module 2010 is further configured to send first configuration information to the terminal device, where the first configuration information includes a first mapping relationship between the index of the first information and at least one of the type of the first information, the modulation scheme of the first information, the code rate of the first information, or the transport block size of the first information.

Optionally, the modulation scheme of the first information and/or the code rate of the first information are/is determined by the terminal device based on at least one of quality of service of the first information or channel state information for information transmission between the terminal device and the network device.

Optionally, the second information includes at least one of a type of the first information, a transport block size of the first information, the modulation scheme of the first information, or the code rate of the first information.

Optionally, the transceiver module 2010 is further configured to send second configuration information to the terminal device, where the second configuration information indicates a resource for sending the first information by the terminal device, and the resource includes at least one of a time domain resource, a frequency domain resource, a code domain resource, and a space domain resource. The transceiver module 2010 is specifically configured to receive, on the resource, the first information and the second information that are sent by the terminal device.

Optionally, the transceiver module 2010 is specifically configured to receive third information and fourth information that are sent by the terminal device, where the third information includes N pieces of first information, the N pieces of first information correspond to M₁ modulation schemes and/or M₂ code rates, the fourth information is used to determine a modulation scheme of the third information and/or a code rate of the third information, M₁ is less than or equal to N, M₂ is less than or equal to N, and M₁, M₂, and N are positive integers.

Optionally, the N pieces of first information are sent in a frequency division multiplexing mode, a time division multiplexing mode, or a predefined mode.

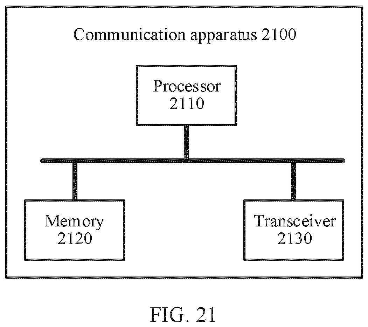

An embodiment of this application provides a communication apparatus 2100. FIG. 21 is a block diagram of the communication apparatus 2100 according to an embodiment of this application.

The communication apparatus 2100 includes a processor 2110. The processor 2110 is configured to implement a method in embodiments of this application by using a logic circuit, or by executing instructions or a computer program.

Optionally, the apparatus further includes a memory 2120, configured to store the foregoing instructions. Optionally, the memory 2120 is integrated with the processor 2110, or the memory 2120 and the processor 2110 are separately disposed.

Optionally, the apparatus 2100 further includes a transceiver 2130, configured to receive and send a signal, for example, send first information and second information.

Optionally, the processor 2110 is coupled to the memory 2120, and the memory 2120 stores the foregoing instructions or computer program, to implement the method in embodiments of this application. The communication apparatus may be used in a terminal device or a network device in embodiments of this application.

The processor 2110 may be an integrated circuit chip and has a capability of processing a signal. In an implementation process, steps in the foregoing method embodiments may be completed by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

An embodiment of this application further provides a communication device. The communication device includes an input/output interface and a logic circuit. The input/output interface is configured to receive or output information, for example, configured to receive first information and second information, or configured to send first information and second information. The logic circuit is configured to perform the method in the foregoing embodiments, for example, configured to determine the first information, or configured to decode the first information based on the second information.

An embodiment of this application further provides a communication system, including a terminal device in the communication method provided in embodiments of this application, another communication device communicating with the terminal device, a network device, and another communication device communicating with the network device.

An embodiment of this application further provides a computer-readable storage medium. The computer-readable storage medium stores a computer program used to implement the method in the foregoing method embodiments. When the computer program is run on a computer or a processor, the method in the foregoing method embodiments is performed.

An embodiment of this application further provides a computer program product. The computer program product includes computer program code. When the computer program code is run on a computer, the method in the foregoing method embodiments is performed.

It should be understood that, in embodiments of this application, numbers "first", "second", and the like are merely used to distinguish between different objects, for example, to distinguish between different information, and do not constitute a limitation on the scope of embodiments of this application. Embodiments of this application are not limited thereto.

In addition, the term "and/or" in this application describes only an association relationship for describing associated objects and represents that three relationships may exist. For example, A and/or B may represent the following three cases: Only A exists, both A and B exist, and only B exists. In addition, the character "/" in this specification usually represents an "or" relationship between associated objects. In this application, the term "at least one" may represent "one" or "two or more". For example, at least one of A, B, and C may represent the following seventh cases: Only A exists, only B exists, only C exists, both A and B exist, both A and C exist, both C and B exist, and A, B, C all exist.

In this application, an expression similar to "at least one of A or B" may be expressed as "at least one of A and B". In this application, an expression similar to "at least one of A, B, or C" may be expressed as "at least one of A, B, and C". For example, that the second information is used to determine at least one of a modulation scheme of the first information or a code rate of the first information may be expressed as that the second information is used to determine at least one of a modulation scheme of the first information and a code rate of the first information.

A person of ordinary skill in the art may be aware that the units and algorithm steps described with reference to the examples in embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that this implementation goes beyond the scope of this application.

A person skilled in the art may clearly learn that, for the purpose of convenient and brief description, for a specific working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the part contributing to the existing technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining, by a terminal device, first information; and
sending, by the terminal device, the first information and second information to a network device, wherein the second information is used to determine at least one of a modulation scheme of the first information or a code rate of the first information.

2. The method according to claim 1, wherein
the first information comprises artificial intelligence information and/or sensing information.

3. The method according to claim 1 or 2, wherein
the second information comprises a first index, and the first index corresponds to at least one of a type of the first information, the modulation scheme of the first information, the code rate of the first information, or a transport block size of the first information.

4. The method according to claim 3, wherein the method further comprises:
receiving, by the terminal device, first configuration information from the network device, wherein the first configuration information comprises a first mapping relationship between the first index and at least one of the type of the first information, the modulation scheme of the first information, the code rate of the first information, or the transport block size of the first information.

5. The method according to claim 3 or 4, wherein
the modulation scheme of the first information and/or the code rate of the first information are/is determined by the terminal device based on at least one of quality of service of the first information or channel state information for information transmission between the terminal device and the network device.

6. The method according to claim 1 or 2, wherein
the second information comprises at least one of a type of the first information, a transport block size of the first information, the modulation scheme of the first information, or the code rate of the first information.

7. The method according to any one of claims 1 to 6, wherein the method further comprises:
receiving, by the terminal device, second configuration information from the network device, wherein the second configuration information indicates a resource for sending the first information by the terminal device, and the resource comprises at least one of a time domain resource, a frequency domain resource, a code domain resource, and a space domain resource; and
the sending, by the terminal device, the first information and second information to a network device comprises:
sending, by the terminal device, the first information and the second information to the network device on the resource.

8. The method according to any one of claims 1 to 7, wherein the sending, by the terminal device, the first information and second information to a network device comprises:
sending, by the terminal device, third information and fourth information to the network device, wherein the third information comprises N pieces of first information, the N pieces of first information correspond to M₁ modulation schemes and/or M₂ code rates, the fourth information is used to determine a modulation scheme of the third information and/or a code rate of the third information, M₁ is less than or equal to N, M₂ is less than or equal to N, and M₁, M₂, and N are positive integers.

9. The method according to claim 8, wherein
the N pieces of first information are sent in a frequency division multiplexing mode, a time division multiplexing mode, or a predefined mode.

10. A communication method, comprising:
receiving, by a network device, first information and second information that are sent by a terminal device, wherein the second information is used to determine at least one of a modulation scheme of the first information or a code rate of the first information; and
decoding, by the network device, the first information based on the second information.

11. The method according to claim 10, wherein
the first information comprises artificial intelligence information and/or sensing information.

12. The method according to claim 10 or 11, wherein
the second information comprises a first index, and the first index corresponds to at least one of a type of the first information, the modulation scheme of the first information, the code rate of the first information, or a transport block size of the first information.

13. The method according to claim 12, wherein the method further comprises:
sending, by the network device, first configuration information to the terminal device, wherein the first configuration information comprises a first mapping relationship between the index of the first information and at least one of the type of the first information, the modulation scheme of the first information, the code rate of the first information, or the transport block size of the first information.

14. The method according to claim 12 or 13, wherein
the modulation scheme of the first information and/or the code rate of the first information are/is determined by the terminal device based on at least one of quality of service of the first information or channel state information for information transmission between the terminal device and the network device.

15. The method according to claim 10 or 11, wherein
the second information comprises at least one of a type of the first information, a transport block size of the first information, the modulation scheme of the first information, or the code rate of the first information.

16. The method according to any one of claims 10 to 15, wherein the method further comprises:
sending, by the network device, second configuration information to the terminal device, wherein the second configuration information indicates a resource for sending the first information by the terminal device, and the resource comprises at least one of a time domain resource, a frequency domain resource, a code domain resource, and a space domain resource; and
the receiving, by a network device, first information and second information that are sent by a terminal device comprises:
receiving, by the network device on the resource, the first information and the second information that are sent by the terminal device.

17. The method according to any one of claims 10 to 16, wherein the receiving, by a network device, first information and second information that are sent by a terminal device comprises:
receiving, by the network device, third information and fourth information that are sent by the terminal device, wherein the third information comprises N pieces of first information, the N pieces of first information correspond to M₁ modulation schemes and/or M₂ code rates, the fourth information is used to determine a modulation scheme of the third information and/or a code rate of the third information, M₁ is less than or equal to N, M₂ is less than or equal to N, and M₁, M₂, and N are positive integers.

18. The method according to claim 17, wherein
the N pieces of first information are sent in a frequency division multiplexing mode, a time division multiplexing mode, or a predefined mode.

19. A communication apparatus, comprising:
a processing module, configured to determine first information; and
a transceiver module, configured to send the first information and second information to a network device, wherein the second information is used to determine at least one of a modulation scheme of the first information or a code rate of the first information.

20. The apparatus according to claim 19, wherein
the first information comprises artificial intelligence information and/or sensing information.

21. The apparatus according to claim 19 or 20, wherein
the second information comprises a first index, and the first index corresponds to at least one of a type of the first information, the modulation scheme of the first information, the code rate of the first information, or a transport block size of the first information.

22. The apparatus according to claim 21, wherein
the transceiver module is further configured to receive first configuration information from the network device, wherein the first configuration information comprises a first mapping relationship between the first index and at least one of the type of the first information, the modulation scheme of the first information, the code rate of the first information, or the transport block size of the first information.

23. The apparatus according to claim 21 or 22, wherein
the modulation scheme of the first information and/or the code rate of the first information are/is determined by the processing module 1910 based on at least one of quality of service of the first information or channel state information for information transmission between the apparatus and the network device.

24. The apparatus according to claim 19 or 20, wherein
the second information comprises at least one of a type of the first information, a transport block size of the first information, the modulation scheme of the first information, or the code rate of the first information.

25. The apparatus according to any one of claims 19 to 24, wherein
the transceiver module is further configured to receive second configuration information from the network device, wherein the second configuration information indicates a resource for sending the first information by the transceiver module, and the resource comprises at least one of a time domain resource, a frequency domain resource, a code domain resource, and a space domain resource; and
the transceiver module is specifically configured to send the first information and the second information to the network device on the resource.

26. The apparatus according to any one of claims 19 to 25, wherein
the transceiver module is specifically configured to send third information and fourth information to the network device, wherein the third information comprises N pieces of first information, the N pieces of first information correspond to M₁ modulation schemes and/or M₂ code rates, the fourth information is used to determine a modulation scheme of the third information and/or a code rate of the third information, M₁ is less than or equal to N, M₂ is less than or equal to N, and M₁, M₂, and N are positive integers.

27. The apparatus according to claim 26, wherein
the N pieces of first information are sent in a frequency division multiplexing mode, a time division multiplexing mode, or a predefined mode.

28. A communication apparatus, comprising:
a transceiver module, configured to receive first information and second information that are sent by a terminal device, wherein the second information is used to determine at least one of a modulation scheme of the first information or a code rate of the first information; and
a processing module, configured to decode the first information based on the second information.

29. The apparatus according to claim 28, wherein
the first information comprises artificial intelligence information and/or sensing information.

30. The apparatus according to claim 28 or 29, wherein
the second information comprises a first index, and the first index corresponds to at least one of a type of the first information, the modulation scheme of the first information, the code rate of the first information, or a transport block size of the first information.

31. The apparatus according to claim 30, wherein
the transceiver module is further configured to send first configuration information to the terminal device, wherein the first configuration information comprises a first mapping relationship between the index of the first information and at least one of the type of the first information, the modulation scheme of the first information, the code rate of the first information, or the transport block size of the first information.

32. The apparatus according to claim 30 or 31, wherein
the modulation scheme of the first information and/or the code rate of the first information are/is determined by the terminal device based on at least one of quality of service of the first information or channel state information for information transmission between the terminal device and the network device.

33. The apparatus according to claim 28 or 29, wherein
the second information comprises at least one of a type of the first information, a transport block size of the first information, the modulation scheme of the first information, or the code rate of the first information.

34. The apparatus according to any one of claims 28 to 33, wherein
the transceiver module is further configured to send second configuration information to the terminal device, wherein the second configuration information indicates a resource for sending the first information by the terminal device, and the resource comprises at least one of a time domain resource, a frequency domain resource, a code domain resource, and a space domain resource; and
the transceiver module is specifically configured to receive, on the resource, the first information and the second information that are sent by the terminal device.

35. The apparatus according to any one of claims 28 to 34, wherein
the transceiver module is specifically configured to receive third information and fourth information that are sent by the terminal device, wherein the third information comprises N pieces of first information, the N pieces of first information correspond to M₁ modulation schemes and/or M₂ code rates, the fourth information is used to determine a modulation scheme of the third information and/or a code rate of the third information, M₁ is less than or equal to N, M₂ is less than or equal to N, and M₁, M₂, and N are positive integers.

36. The apparatus according to claim 35, wherein
the N pieces of first information are sent in a frequency division multiplexing mode, a time division multiplexing mode, or a predefined mode.

37. A communication apparatus, comprising a processor, wherein the processor is coupled to a memory, the memory is configured to store a computer program, and the processor is configured to execute the computer program stored in the memory, to enable a communication device to perform the method according to any one of claims 1 to 18.

38. A communication device, comprising an input/output interface and a logic circuit, wherein
the input/output interface is configured to receive or output information; and
the logic circuit is configured to perform the method according to any one of claims 1 to 18.

39. A computer-readable storage medium, wherein
the computer-readable medium stores a computer program; and
when the computer program is run on a computer or a processor, the method according to any one of claims 1 to 18 is performed.

40. A computer program product, comprising a computer program, wherein when the computer program is executed, the method according to any one of claims 1 to 18 is implemented.

41. A communication system, comprising a terminal device and a network device, wherein the terminal device is configured to implement the method according to any one of claims 1 to 9, and the network device is configured to implement the method according to any one of claims 10 to 18.
